# EUROPEAN PATENT SPECIFICATION

(11) **EP 0 574 153 B1**
(45) Date of publication and mention of the grant of the patent: **30.07.1997**
(21) Application number: 93303974.5
(22) Date of filing: 21.05.1993
(51) Int. Cl.: C08F 10/02, C08F 4/655

(54) **Process for preparing ultra-high molecular weight polyethylene**
Verfahren zur Herstellung von ultrahochmolekularem Polyethylen
Procédé de préparation de polyéthylène à poids moléculaire très élevé

(30) Priority: 21.05.1992 JP 171431/92
(43) Date of publication of application: 15.12.1993
(73) Proprietor: NIPPON OIL Co. Ltd., Minato-ku Tokyo (JP)
(72) Inventor: Shiraishi, Takeichi, Kawasaki-shi, Kanagawa (JP); Okamoto, Mitsuo, Midori-ku, Kanagawa (JP); Matsuura, Kazuo, Yokohama-shi, Kanagawa (JP)
(74) Representative: Smaggasgale, Gillian Helen

(56) References cited:
- EP-A- 0 349 146
- EP-A- 0 480 375
- CHEMICAL ABSTRACTS, vol. 87, no. 18, 31 October 1977, Columbus, Ohio, US; abstract no. 136646u, 'Highly active alpha-olefin polymerization catalyst component with carrier' page 20 ;column 1 ;

## Description

### Background of the Invention

The present invention relates to a process for preparing an ultra-high molecular weight polyethylene and more particularly to a process of preparing an ultrahigh molecular weight polyethylene superior in fluidity, high in bulk density, small in particle size, narrow in particle size distribution and substantially free from formation of coarse particles.

Ultra-high molecular weight polyethylenes are superior in impact resistance, abrasion resistance and self-lubricity and are used as materials for various molded articles and high strength materials. In these uses, ultra-high molecular weight polyethylenes as starting resins are in many cases required to be small in particle diameter and narrow in particle size distribution.

In the preparation of an ultra-high molecular weight polyethylene it has been known to use a catalyst comprising an inorganic magnesium compound such as, for example, magnesium halide, magnesium oxide or magnesium hydroxide, as carrier, and a transition metal compound such as titanium or vanadium supported on the carrier.

In such known technique, however, the ultra-high molecular weight polyethylene is generally low in bulk density and wide in particle size distribution; besides, the formation of coarse particles is often observed. Consequently, in the case of applying such ultra-high molecular weight polyethylene to various molding uses, there often have occurred problems such as unevenness in the filling of the polymer, deterioration of strength and surface roughening. Also in the manufacturing process for such ultra-high molecular weight polyethylene there have been problems such as lowering of the productivity and blocking of the polymer withdrawing line.

The present inventors have heretofore made earnest studies about the above-mentioned problems and already found out that an ultra-high molecular weight polyethylene having a small average particle diameter, a narrow particle size distribution and a relatively spherical shape and improved in free fluidity is obtained by using a specific catalyst (Japanese Patent Laid Open Nos. 129006/89, 70710/90 (EP-A-0 349 146) and 50510/90). However, there has still been a demand for a further improved ultra-high molecular weight polyethylene.

It is the object of the present invention to solve the above-mentioned problems.

Having made extensive studies, the present inventors found out surprisingly that the drawbacks of the prior art could be overcome by preparing an ultra-high molecular weight polyethylene using the following specific solid catalyst component and organometallic compound.

### Summary of the Invention

The present invention resides in a process for preparing an ultra-high molecular weight polyethylene, using a catalyst comprising a solid catalyst component and an organometallic compound, the said solid catalyst component being a material obtained by contacting the following components [A] and [B] with each other;
[A] a reaction product resulting from the reaction of a magnesium halide and a compound represented by the general formula Ti(OR¹)₄ wherein R¹ is a hydrocarbon residue having 1 to 20 carbon atoms;
[B] a reaction product resulting from the reaction of an aluminum halide and a compound represented by the general formula R²OR³ wherein R² and R³, which may be the same or different, are each a hydrocarbon group having 1 to 20 carbon atoms.

According to a second aspect of the present invention there is provided a catalyst comprising a solid catalyst component, wherein the solid catalyst component is obtained by contacting the following components [A] and [B] with each other:
[A] a reaction product resulting from the reaction of a magnesium halide and a compound represented by the general formula Ti(OR¹)₄ where R¹ is a hydrocarbon residue having 1 to 20 carbon atoms; and
[B] a reaction product resulting from the reaction of an aluminum halide and a compound represented by the general formula R²OR³ where R² and R³, which may be the same or different, are each a hydrocarbon group having 1 to 20 carbon atoms.

### Detailed Description of the Invention

By using the specific catalyst in the present invention there can be prepared an ultra-high molecular weight polyethylene having a small average particle diameter and a narrow particle size distribution, substantially free from formation of coarse particles, extremely superior in free fluidity and having a high bulk density.

The present invention will be described in detail hereinunder.

As the magnesium halide in the present invention there is preferably used a substantially anhydrous one. Examples are magnesium difluoride, magnesium dichloride, magnesium dibromide, magnesium diiodide, and mixtures thereof, with magnesium dichloride being particularly preferred.
These magnesium halides may be treated in advance with an electron donor such as alcohol, ester, ketone, carboxylic acid, ether, amine or phosphine.

The titanium compound of the general formula Ti(OR¹)₄ is one wherein R¹ is a hydrocarbon residue, preferably a hydrocarbon group, having 1 to 20, preferably 1 to 8, carbon atoms. As examples of such hydrocarbon residue there are mentioned alkyl groups such as methyl, ethyl, propyl, iso-propyl, butyl, sec-butyl, tert-butyl, pentyl, hexyl and octyl, aryl groups such as phenyl, tolyl and xylyl, and aralkyl groups such as benzyl. The hydrocarbon residue indicates an unsubstituted or substituted hydrocarbon residue.

Examples of such titanium compound include tetramethoxytitanium, tetraethoxytitanium, tetrapropoxytitanium, tetra-iso-propoxytitanium, tetrabutoxytitanium, tetra-sec-butoxytitanium, tetra-tert-butoxytitanium, tetrapentoxytitanium, tetrahexyloxytitanium, tetraoctyloxytitanium, tetraphenoxytitanium, tetratolyloxytitanium, and tetraxylyloxytitanium, with tetraethoxytitanium, tetrapropoxytitanium and tetrabutoxytitanium being particularly preferred. These titanium compounds may be used as a mixture of two or more of them.

Conditions for the reaction of the magnesium halide and the titanium compound are not specially limited, but according to a preferred method, both are mixed and reacted together under heating at a temperature of 20° to 200°, preferably 50° to 200°, for 5 minutes to 10 hours, preferably 10 minutes to 2 hours. These operations should be performed in an inert gas (e.g., nitrogen gas or helium) and moisture should be avoided as far as possible.

The magnesium halide and the titanium compound are preferably reacted in the absence of solvent.

The reaction ratio of the magnesium halide to the titanium compound is preferably in the range of 0.05 to 10, more preferably 0.1 to 5, in terms of Mg/Ti (mole ratio).

As the aluminum halide in the present invention there is preferably used a substantially anhydrous one. Examples are aluminum fluoride, aluminum chloride, aluminum bromide, aluminum iodide, and mixtures thereof, with aluminum chloride being particularly preferred.

The compound of the general formula R²OR³ used in the present invention is one wherein R² and R³ are each a hydrocarbon group having 1 to 20, preferably 1 to 8, carbon atoms. Examples of such a hydrocarbon group are alkyl groups such as methyl, ethyl, propyl, iso-propyl, butyl, sec-buty, tert-butyl, pentyl, iso-pentyl, neopentyl, hexyl and octyl, aryl groups such as phenyl, tolyl and xylyl, aralkyl groups such as benzyl, and alkenyl groups such as allyl and propenyl. In the above formrula, R² and R³ may be the same or different, and preferably R² and R³ do not form a ring in a mutually bonded state.

As examples of the compound (hereinafter referred to as the "ether") represented by the general formula R²OR³ there are mentioned dimethyl ether, methyl ethyl ether, methyl propyl ether, methyl-iso-propyl ether, methyl butyl ether, methyl tert-butyl ether, methyl hexyl ether, methyl n-octyl ether, diethyl ether, ethyl propyl ether ethyl iso-propyl ether, ethyl butyl ether, ethyl tert-butyl ether, ethyl hexyl ether, ethyl n-octyl ether, dipropyl ether, methyl propyl ether, propyl iso-propyl ether, propyl butyl ether, propyl tert-butyl ether, propyl hexyl ether, propyl n-octyl ether, di-iso-propyl ether , iso-propyl butyl ether, iso-propyl tert-butyl ether, iso-propyl hexyl ether, iso-propyl-n-octyl ether, dibutyl ether, butyl tert-butyl ether, butyl hexyl ether, butyl n-octyl ether, di-tert-butyl ether, tert-butyl hexyl ether, tert-butyl n-octyl ether, dioctyl ether, octyl hexyl ether, diphenyl ether, phenyl methyl ether, phenyl ethyl ether, phenyl propyl ether, phenyl iso-propyl ether, phenyl butyl ether, phenyl tert-butyl ether, allyl hexyl ether, allyl octyl ether, diallyl ether, allyl methyl ether, allyl ethyl ether, allyl propyl ether, allyl iso-propyl ether, allyl butyl ether, allyl tert-butyl ether, allyl hexyl ether, allyl octyl ether, allyl phenyl ether, diamyl ether and isoamyl ether, with diethyl ether and dibutyl ether being particularly preferred.

The reaction of the aluminum halide and the ether is not specially limited, but preferably both are mixed and reacted together under heating at a temperature of -10° to 200°C, preferably 0° to 200°C, for 5 minutes to 10 hours, preferably 10 minutes to 2 hours. Of course, these operations should preferably be performed in an inert gas (e.g. nitrogen gas or helium), and moisture should be avoided as far as possible.

The reaction ratio of the aluminum halide to the ether is preferably in the range of 0.01 to 10, more preferably 0.1 to 5, in terms of Al/R²OR³ (mole ratio).

The solid catalyst component used in the present invention is obtained by mutually contacting [A] the reaction product of the magnesium halide and the titanium compound of the general formula Ti(OR¹)₄ and [B] the reaction product of the aluminum halide and the ether of the general formula R²OR³. It is optional whether the contact is to be effected by a method wherein the component [B] is added into the component [A] or by a method wherein the component [A] is added into the component [B], the latter method being preferred.

How to contact the components [A] and [B] with each other is not specially limited, but according to a preferred method, both are mixed together under heating at a temperature of -20° to 200°C, preferably -10° to 200°C, in an inert hydrocarbon solvent (e.g. hexane, heptane, toluene, or cyclohexane), for 5 minutes to 10 hours, preferably 10 minutes to 2 hours, and thereafter washed with an inert hydrocarbon solvent. Of course, these operations should preferably be carried out in an inert gas (e.g. nitrogen gas or helium), and moisture should be avoided.

The amount of the component [B] used in the present invention is preferably 0.01 to 10 g, more preferably 0.5 to 5 g, per gram of the component [A].

The solid catalyst component thus obtained is combined with an organometallic compound for use in preparing the ultra-high molecular weight polyethylene of the invention.

As the organometallic compound used in the present invention there may be used an organometallic compound of a Group I to Group IV metal in the Periodic Table which is known as a component of a Ziegler type catalyst. But an organoaluminum compound or an organozinc compound is particularly preferred. Examples are organoaluminum compounds of the general formulae R₃Al, R₂AlX, RAlX₂, R₂AlOR, RAl(OR)X and R₃Al₂X₃ where Rs, which may be the same or different, are each a hydrocarbon group such as an alkyl or aryl group having 1 to 20 carbon atoms and X is a halogen atom (e.g. chlorine, bromine or iodine), as well as organozinc compounds of the general formula R₂Zₙ where Rs, which may be the same or different, are each an alkyl group having 1 to 20 carbon atoms. More concrete examples include triethylaluminum, triisopropylaluminum, triisobutylaluminum, tri-sec-butylaluminum, tri-tert-butylaluminum, trihexylaluminum trioctylaluminum, diethylaluminum chloride, diisopropylaluminum chloride, diethylaluminum ethoxide, ethylaluminum sesquichloride, diethylzinc, and mixtures thereof, with triethylaluminum being particularly preferred.

The amount of the organometallic compound to be used is not specially limited, but usually it is employable in an amount of 0.1 to 1,000 moles per mole of the titanium compound.

In the present invention, the organometallic compound component may be used as a mixture or addition compound of the organometallic compound exemplified above and an organic acid ester.

In the case where the organometallic compound component is used as a mixture of the organometallic compound and an organic acid ester, the organic acid ester is used usually in an amount of 0.1 to 1 mole, preferably 0.2 to 0.5 mole, per mole of the organometallic compound. In the case of using it as an addition compound of the organometallic compound and the organic acid ester, it is preferable that the organometallic compound: organic acid ester mole ratio be in range of 2:1 to 1:2.

The said organic acid ester is an ester of a saturated or unsaturated, mono- or dibasic organocarboxylic acid having 1 to 24 carbon atoms with an alcohol having 1 to 30 carbon atoms.

Examples are methyl formate, ethyl acetate, amyl acetate, phenyl acetate, octyl acetate, methyl methacrylate, ethyl stearate, methyl benzoate, ethyl benzoate, n-propyl benzoate, isopropyl benzoate, butyl benzoate, hexyl benzoate, cyclopentyl benzoate, cyclohexyl benzoate, phenyl benzoate, 4-tolyl benzoate, methyl salicylate, ethyl salicylate, ethyl p-hydroxybenzoate, phenyl salicylate, cyclohexyl p-hydroxybenzoate, benzyl salicylate, ethyl o-resorcinol-carboxylate methyl anisate, phenyl anisate, benzyl anisate, methyl p-ethoxybenzoate, methyl p-toluylate, ethyl p-toluylate, phenyl p-toluylate, ethyl o-toluylate, ethyl m-toluylate, methyl p-aminobenzoate, ethyl p-aminobenzoate, vinyl benzoate, benzyl benzoate, methyl naphthoate and ethyl naphthoate. Particularly preferred are alkyl esters of benzoic acid, o- or p-toluic acid or anisic acid, especially methyl and ethyl esters.

The polymerization for the ultra-high molecular weight polyethylene, using the catalyst in the present invention, can be conducted in the form of a slurry polymerization, a solution polymerization or a vapor-phase polymerization. Particularly, the catalyst used in the present invention is suitable for a slurry polymerization. The polymerization reaction is performed in the same way as in the conventional olefin polymerization reaction using a Ziegler type catalyst. More specifically, ethylene is polymerized in a substantially oxygen- and water-free condition, in the presence of an inert hydrocarbon and at a preferred hydrogen concentration of 0 to 20 mole%, more preferably 0-10 mole%, to prepare the ultra-high molecular weight polyethylene. In this case, conditions for the polymerization involve a temperature of 0° to 120°C , preferably 20° to 100°C , and a pressure of 0 to 70 kg/cm²G, preferably 0 to 60 kg/cm²G. As examples of the inert hydrocarbon there are mentioned saturated hydrocarbons such as butane, pentane, hexane, heptane, octane and cyclohexane, as well as aromatic hydrocarbons such as benzene, toluene and xylene. Further, where required in connection with molding of the resulting ultra-high molecular weight polyethylene, mention may also be made of high-boiling organic solvents such as decalin, tetralin, decane and kerosene.

Adjustment of the molecular weight can be done to some extent by changing polymerization conditions such as polymerization temperature and catalyst mole ratio, but the addition of hydrogen into the polymerization system is more effective for this purpose. Of course, using the catalyst prepared according to the present invention, a multi-stage polymerization reaction of two or more stages involving different polymerization conditions such as different hydrogen concentrations and different polymerization temperatures can be carried out without any trouble.

By the process of the present invention described above there is obtained an ultra-high molecular weight polyethylene having an intrinsic viscosity of 6 to 50 dl/g, preferably 8 to 30 dl/g, in decalin at 135°C and a molecular weight of 600,000 to 12,000,000, preferably 900,000 to 6,000,000.

Copolymerization with α -olefins or dienes is also preferable for the purpose of modifying the ultra-high molecular weight polyethylene of the present invention. Examples of such α -olefins include propylene, butene-1, hexene-1 and 4-methylpentene-1, and examples of such dienes include butadiene, 1,4-hexadiene, ethyl norbornene and dicyclopentadiene.

According to the process of the present invention described above there can be obtained an ultra-high molecular weight polyethylene having a small average particle diameter and a narrow particle size distribution, superior in free fluidity, free from formation of coarse particles and high in bulk density.

### [Examples]

The present invention will be described below concretely, but it is to be understood that the invention is not limited thereto.

### Example 1

### (a) Preparation of Solid Catalyst Component

1.9 g of MgCl₂ and 13.6 ml of tetrabutoxytitanium were placed into a thoroughly dried 100 ml flask in a nitrogen atmosphere, and reaction was allowed to take place at 90°C for 2 hours under stirring. The resulting reaction product is designated component [A].

Next, 20 g of AlCl₃ and 10 ml of n-heptane were charged into a thoroughly dried 300 ml flask in a nitrogen atmosphere, and 30 ml of diethyl ether was added dropwise under stirring. The temperature was raised to 40°C and reaction was allowed to take place for 2 hours. The resulting reaction product is designated component [B].

While component [B] was stirred at 40°C , component [A] was dropwise added slowly into component [B]. After completion of the dropwise addition, the temperature was reduced to room temperature and the supernatant liquid was removed by decantation, followed by washing with five 200 ml portions of hexane to afford a solid catalyst component containing 1.6 wt% of titanium.

### (b) Polymerization of Ethylene

1,000 ml of hexane, 1 mmol of triethylaluminum and 5 mg of the solid catalyst component prepared above were added successively in this order into a 2-liter autoclave at room temperature in a nitrogen atmosphere. Thereafter, the temperature was raised to 65°C and ethylene was fed under pressure to maintain the total pressure at 10 kg/cm²G. In this condition, polymerization was conducted for 1 hour to afford an ultra-high molecular weight polyethylene. Catalytic activity was 5,000g.polyethylene/g.solid catalyst · h · C₂H₄ pressure.

### (c) Evaluation of Physical Properties

The ultra-high molecular weight polyethylene thus prepared was evaluated for physical properties by conventional methods; as a result, it was found to have a bulk density of 0.368 g/cm³, an intrinsic viscosity (in decalin at 135°C ) of 16.1 dl/g, an average particle diameter of 200 µ m, a particle size distribution of 1.0 in terms of Span value and a high free fluidity. The Span value, which indicates the width of particle size distribution, had been determined from the following equation. The proportion of 600 µ m or larger particles was 0.3 wt%:

Span value = (D90 - D10)/Dave
- D90 :: 90 wt% particle dia. (µ m)
- D10 :: 10 wt% particle dia. (µ m)
- Dave :: average particle diameter (µ m)

The results of such physical properties evaluation are as shown in Table 1.

### Example 2

The procedure of Example 1 was repeated except that the amount of AlCl₃ used in the preparation of component [B] was changed to 10 g. The results of physical properties evaluation of the resulting polyethylene are as shown in Table 1.

### Example 3

The procedure of Example 1 was repeated except that the amount of diethyl ether used in the preparation of component [B] was changed to 40 ml. The results of physical properties evaluation of the resulting polyethylene are as shown in Table 1.

### Example 4

The procedure of Example 1 was repeated except that the diethyl ether used in the preparation of component [B] was replaced by 35 ml of ethyl butyl ether. The results of physical properties evaluation of the resulting polyethylene are as shown in Table 1.

### Example 5

The procedure of Example 1 was repeated except that the amount of tetrabutoxytitanium used in the preparation of component [A] was changed to 25 ml. The results of physical properties evaluation of the resulting polyethylene are as shown in Table 1.

### Example 6

The procedure of Example 5 was repeated except that the tetrabutoxytitanium used in the preparation of component [A] was replaced by tetra-iso-propoxytitanium. The results of physical properties evaluation of the resulting polyethylene are as shown in Table 1.

### Example 7

The procedure of Example 6 was repeated except that the tetra-iso-propoxytitanium used in the preparation of component [A] was replaced by tetrahexyloxytitanium, the amount of diethyl ether used in the preparation of component [B] was changed to 10 ml, and 30 ml of diphenyl ether was further added. The results of physical properties evaluation of the resulting polyethylene are as shown in Table 1.

### Comparative Example 1

The procedure of Example 1 was repeated except that the diethyl ether used in the preparation of component [B] was replaced by 40 ml of Si(OEt)₄. The results of physical properties evaluation of the resulting polyethylene are as set forth in Table 1.

### Comparative Example 2

The procedure of Example 1 was repeated except that 13.6 ml of tetrabutoxytitanium was used alone without using MgCl₂ in the preparation of component [A]. The results of physical properties evaluation of the resulting polyethylene are as set forth in Table 1.

### Comparative Example 3

The procedure of Example 1 was repeated except that 30 ml of diethyl ether was used alone without using AlCl₃ and n-heptane in the preparation of component [B]. The results of physical properties evaluation of the resulting polyethylene are as set forth in Table 1.

### Comparative Example 4

The procedure of Example 1 was repeated except that the diethyl ether used in the preparation of component [B] was replaced by 30 ml of hexyl alcohol. The results of physical properties evaluation of the resulting polyethylene are as set forth in Table 1.

### Comparative Example 5

### (a) Preparation of Solid Catalyst Component

10 g of MgCl₂ and 1 ml of TiCl₄ were placed into a thoroughly dried, stainless steel ball-milling pot having an internal volume of 400 ml and ball-milled for 16 hours to obtain a solid component. 10 g of the solid component was made into a hexane slurry, into which was dropwise added the component [B] prepared in Example 1, under stirring. After completion of the dropwise addition, the supernatant liquid was removed by decantation at room temperature, followed by washing with five 200 ml portions of hexane, to afford a solid catalyst component containing 3.2 wt% of titanium.

### (b) Polymerization of Ethylene

The procedure of Example 1 was repeated except that the solid catalyst component used therein was replaced by the solid catalyst component just prepared above. The results of physical properties evaluation of the resulting polyethylene are as set forth in Table 1.

### Comparative Example 6

The procedure of Example 1 was repeated except that the MgCl₂ used in the preparation of component [A] was replaced by MgO. The results of physical properties evaluation of the resulting polyethylene are as set out in Table 1.

### Comparative Example 7

The procedure of Example 1 was repeated except that the diethyl ether used in the preparation of component [B] was not added. The results of physical properties evaluation of the resulting polyethylene are as set out in Table 1.

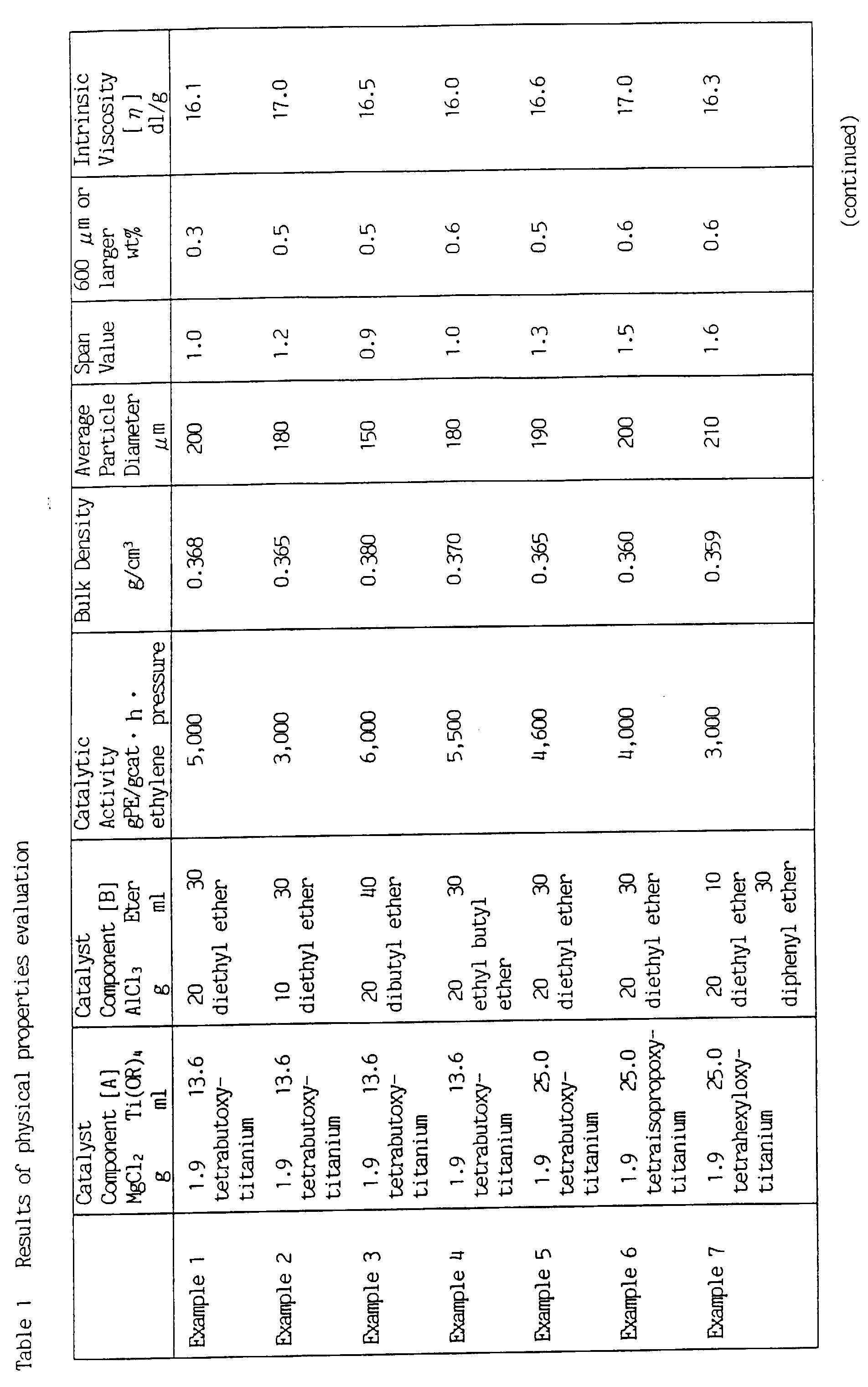

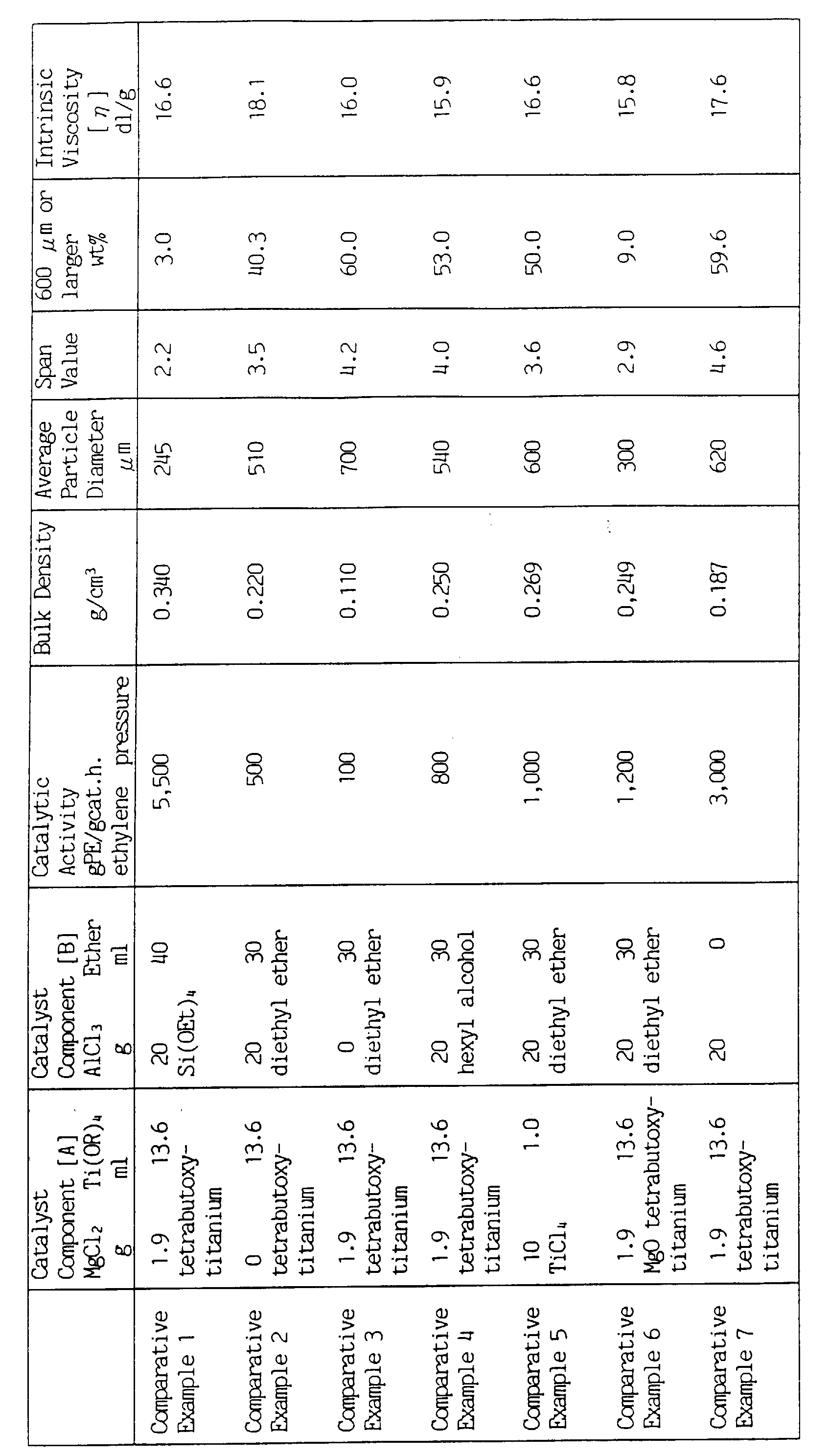

## Claims

1. A process for preparing an ultra-high molecular weight polyethylene, using a catalyst comprising a solid catalyst component and an organometallic compound, said solid catalyst component being a material obtained by contacting the following components [A] and [B] with each other:
[A] a reaction product resulting from the reaction of a magnesium halide and a compound represented by the general formula Ti(OR¹)₄ where R¹ is a hydrocarbon residue having 1 to 20 carbon atoms; and
[B] a reaction product resulting from the reaction of an aluminum halide and a compound represented by the general formula R²OR³ where R² and R³, which may be the same or different, are each a hydrocarbon group having 1 to 20 carbon atoms.

2. A process as set forth in Claim 1, wherein a reaction ratio of the magnesium halide to the titanium compound is in the range of 0.05 to 10 in terms of Mg/Ti (mole ratio).

3. A process as set forth in Claim 1 or 2, wherein a reaction ratio of the aluminum halide to the ether is in the range of 0.01 to 10 in terms of Al/R²OR³ (mole ratio).

4. A process as set forth in any one of Claims 1 to 3, wherein the amount of component [B] used is in the range of 0.01 to 10 grams per gram of the component [A].

5. A process as set forth in any one of Claims 1 to 4, wherein R¹ is a hydrocarbon group having 1 to 8 carbon atoms.

6. A process as set forth in any one of Claims 1 to 5, wherein R² and R³ are each a hydrocarbon group having 1 to 8 carbon atoms.

7. A process as set forth in any one of Claims 1 to 6, wherein the organometallic compound is an organoaluminum compound or an organozinc compound.

8. A process as set forth in any one of Claims 1 to 7 wherein the magnesium halide and the titanium compound are reacted in the absence of solvent.

9. A catalyst comprising a solid catalyst component, wherein the solid catalyst component is obtained by contacting the following components [A] and [B] with each other:
[A] a reaction product resulting from the reaction of a magnesium halide and a compound represented by the general formula Ti(OR¹)₄ where R¹ is a hydrocarbon residue having 1 to 20 carbon atoms; and
[B] a reaction product resulting from the reaction of an aluminum halide and a compound represented by the general formula R²OR³ where R² and R³, which may be the same or different, are each a hydrocarbon group having 1 to 20 carbon atoms.

## Patentansprüche

1. Verfahren zur Herstellung eines ultra-hochmolekularen Polyethylens, bei dem ein Katalysator eingesetzt wird, der eine feste Katalysatorkomponente und eine organometallische Verbindung enthält, wobei die feste Katalysatorkomponente ein Material ist, das durch jeweiliges Inkontaktbringen der folgenden Komponenten [A] und [B] erhalten wird:
[A] ein Reaktionsprodukt aus der Reaktion eines Magnesiumhalogenids und einer Verbindung, die durch die folgende allgemeine Formel Ti(OR¹)₄ dargestellt ist, wobei R¹ ein Kohlenwasserstoffrest mit 1 bis 20 Kohlenstoffatomen ist, und
[B] ein Reaktionsprodukt aus der Reaktion eines Aluminiumhalogenids und einer Verbindung, die durch die allgemeine Formel R²OR³ dargestellt ist, wobei R² und R³, die gleich oder verschieden sein können, jeweils eine Kohlenwasserstoffgruppe mit 1 bis 20 Kohlenstoffatomen darstellen.

2. Verfahren nach Anspruch 1, bei dem ein Reaktionsverhältnis des Magnesiumhalogenids zu der Titanverbindung im Bereich von 0,05 bis 10 vorliegt, bezogen auf Mg/Ti (Molverhälnis).

3. Verfahren nach Anspruch 1 oder 2, bei dem ein Reaktionsverhältnis des Aluminiumhalogenids zu dem Ether im Bereich von 0,01 bis 10 vorliegt, bezogen auf Al/R²OR³ (Molverhältnis).

4. Verfahren nach einem der Ansprüche 1 bis 3, bei dem die Menge der verwendeten Komponente [B] im Bereich von 0,01 bis 10 g / g Komponente [A] liegt.

5. Verfahren nach einem der Ansprüche 1 bis 4, bei dem R¹ eine Kohlenwasserstoffgruppe mit 1 bis 8 Kohlenstoffatomen ist.

6. Verfahren nach einem der Ansprüche 1 bis 5, bei dem R² und R³ jeweils eine Kohlenwasserstoffgruppe mit 1 bis 8 Kohlenstoffatomen ist.

7. Verfahren nach einem der Ansprüche 1 bis 6, bei dem die organometallische Verbindung eine Organoaluminiumverbindung oder eine Organozinkverbindung ist.

8. Verfahren nach einem der Ansprüche 1 bis 7, bei dem das Magnesiumhalogenid und die Titanverbindung ohne Lösungsmittel umgesetzt werden.

9. Katalysator, der eine feste Katalysatorkomponente enthält, wobei die feste Katalysatorkomponente durch jeweiliges Inkontaktbringen der folgenden Komponenten [A] und [B] erhalten wird:
[A] ein Reaktionsprodukt aus der Reaktion eines Magnesiumhalogenids und einer Verbindung, die durch die folgende allgemeine Formel Ti(OR¹)₄ dargestellt ist, wobei R¹ ein Kohlenwasserstoffrest mit 1 bis 20 Kohlenstoffatomen ist, und
[B] ein Reaktionsprodukt aus der Reaktion eines Aluminiumhalogenids und einer Verbindung, die durch die allgemeine Formel R²OR³ dargestellt ist, wobei R² und R³, die gleich oder verschieden sein können, jeweils eine Kohlenwasserstoffgruppe mit 1 bis 20 Kohlenstoffatomen sind.

## Revendications

1. Procédé pour la préparation d'un polyéthylène de poids moléculaire ultra-élevé, utilisant un catalyseur comprenant un composant catalytique solide et un composé organométallique, ce composant catalytique solide étant un matériau obtenu par mise en contact des composants suivants [A] et [B] l'un avec l'autre :
[A] un produit réactionnel résultant de la réaction d'un halogénure de magnésium et d'un composé représenté par la formule générale Ti(OR¹)₄, dans laquelle R¹ est un groupe hydrocarboné ayant 1 à 20 atomes de carbone; et
[B] un produit réactionnel résultant de la réaction d'un halogénure d'aluminium et d'un composé représenté par la formule générale R²OR³, dans laquelle R² et R³ qui peuvent être identiques ou différents, sont chacun un groupe hydrocarboné ayant 1 à 20 atomes de carbone.

2. Procédé suivant la revendication 1, dans lequel un rapport réactionnel de l'halogénure de magnésium au composé du titane est compris dans la gamme de 0,05 à 10 en termes de Mg/Ti (rapport molaire).

3. Procédé suivant l'une quelconque des revendications 1 ou 2, dans lequel un rapport réactionnel de l'halogénure de magnésium à l'éther est compris dans la gamme de 0,01 à 10 en termes de Al/R²OR³ (rapport molaire).

4. Procédé suivant l'une quelconque des revendications 1 à 3, dans lequel la quantité de composant [B] utilisée est comprise dans la gamme de 0,01 à 10 g par g du composant [A].

5. Procédé suivant l'une quelconque des revendications 1 à 4, dans lequel R¹ est un groupe hydrocarboné ayant 1 à 8 atomes de carbone.

6. Procédé suivant l'une quelconque des revendications 1 à 5, dans lequel R² et R³ sont chacun un groupe hydrocarboné ayant 1 à 8 atomes de carbone.

7. Procédé suivant l'une quelconque des revendications 1 à 6, dans lequel le composé organométallique est un composé organoaluminique ou un composé organozincique.

8. Procédé suivant l'une quelconque des revendications 1 à 7, dans lequel l'halogénure de magnésium et le composé du titane sont traités en l'absence de solvant.

9. Catalyseur comprenant un composant catalytique solide, dans lequel le composant catalytique solide est obtenu par mise en contact des composants suivants [A] et [B] l'un avec l'autre :
[A] un produit réactionnel résultant de la réaction d'un halogénure de magnésium et d'un composé représenté par la formule générale Ti(OR¹)₄, dans laquelle R¹ est un groupe hydrocarboné ayant 1 à 20 atomes de carbone; et
[B] un produit réactionnel résultant de la réaction d'un halogénure d'aluminium et d'un composé représenté par la formule générale R²OR³, dans laquelle R² et R³ qui peuvent être identiques ou différents, sont chacun un groupe hydrocarboné ayant 1 à 20 atomes de carbone.
